# EUROPÄISCHE PATENTSCHRIFT

(11) **EP 0 355 305 B1**
(45) Veröffentlichungstag und Bekanntmachung des Hinweises auf die Patenterteilung: **24.02.1993**
(21) Anmeldenummer: 89111210.4
(22) Anmeldetag: 20.06.1989
(51) Int. Cl.: B23C 5/22

(54) **Scheibenfräser**
Disc-milling cutter
Fraise disque

(30) Priorität: 24.08.1988 DE 3828746
(43) Veröffentlichungstag der Anmeldung: 28.02.1990
(73) Patentinhaber: KENNAMETAL GMBH, D-61381 Friedrichsdorf (DE)
(72) Erfinder: Jauch, Robert, D-6340 Dillenburg 1 (DE)
(74) Vertreter: Leiser, Gottfried, Dipl.-Ing.

(56) Entgegenhaltungen:
- GB-A- 953 647
- GB-A- 1 255 944

## Beschreibung

Die Erfindung betrifft ein Fräswerkzeug gemäß der Präambel des Anspruchs 1. Ein solches Werkzeug zeigt z.B. die GB-A-1 255 944.

Fräswerkzeuge mit scheibenförmigem Fräserkörper, die auch als Scheibenfräser bezeichnet werden, sind an ihrem Umfang mit Schneidkörpern besetzt, die jeweils an einem Schneidkörperträger befestigt sind. Die Schneidkörperträger, die auch als Kassetten bezeichnet werden, sind üblicherweise in einer durchgehenden Nut des scheibenförmigen Fräserkörpers aufgenommen. Die Lage der Schneidkörperträger am Fräserkörper wird durch Verzahnungen oder Riffelungen bestimmt, die sowohl axial als auch radial angeordnet sein können. Zur Festlegung der Schneidkörperträger am Fräserkörper werden Keile und Keilschrauben verwendet, um die Schneidkörperträger gegen die verzahnten Anlageflächen des Fräserkörpers anzupressen. Die Schnittbreite kann durch Verändern der Lage der Schneidkörperträger variiert werden.

Die Einstellung der Schnittbreite durch Versetzen der ineinandergreifenden Verzahnungen der Anlageflächen gegeneinander ist ein umständlicher Vorgang, der für jeden Schneidkörperträger wiederholt werden muß. Ferner ist die Abstützung der Schneidkörperträger an den verzahnten Anlageflächen nicht optimal.

Der Erfindung liegt die Aufgabe zugrunde, ein Fräswerkzeug der eingangs angegebenen Art dahingehend weiterzubilden, daß die Einstellung auf die gewünschte Schnittbreite erleichtert und die Abstützung der Scheidkörperträger verbessert wird.

Diese Aufgabe wird bei einem gattungsgemäßen Fräswerkzeug erfindungsgemäß durch die Merkmale des kennzeichnenden Teils des Anspruchs 1 gelöst.

Durch die Kombination dieser Merkmale wird die Einstellung der gewünschten Schnittbreite insofern erleichtert, als aus einer Tabelle die Dicke der für die gewünschte Schnittbreite erforderlichen Unterlegplatten entnommen wird und lediglich zwischen jedem Schneidkörperträger und der entsprechenden Anlagefläche der Ausnehmung des Fräserkörpers eine Unterlegplatte der erforderlichen Dicke eingefügt wird. Alle Anlageflächen zwischen dem Schneidkörperträger und dem Fräserkörper können als ebene Flächen ausgebildet sein, so daß eine optimale Abstützung in allen Richtungen gewährleistet ist, in denen Beanspruchungen auftreten. Die Einstellung der Schnittbreite erfolgt mit hoher Genauigkeit, da die ebenen Oberflächen der Unterlegplatten leicht mit der geforderten Präzision bearbeitet werden können. Stehen die Unterlegplatten nicht unmittelbar in der gewünschten Dicke zur Verfügung, so können auch mehrere Unterlegplatten übereinandergelegt werden. Auch Sondermaße können leicht realisiert werden, indem Unterlegplatten einer bestimmten Stärke überschliffen werden.

Bei der bevorzugten Ausführungsform des Fräswerkzeuges sind die Ausnehmungen abwechselnd auf der einen und auf der anderen Hauptseite des scheibenförmigen Fräserkörpers angeordnet; die Schneidkörperträger sind entsprechend als spiegelsymmetrische linke und rechte Teile ausgebildet. Beispielsweise weist ein Fräswerkzeug fünf linke und fünf rechte Schneidkörperträger auf, die in gleichen Winkelabständen über den Umfang des Fräserkörpers verteilt sind. Bei der bevorzugten Ausführungsform des Fräswerkzeugs haben die Schneidkörper jeweils eine geringere axiale Länge als der axiale Arm des Schneidkörperträgers; die Schneidkante des Schneidkörpers erstreckt sich bis mindestens zu dem freien Ende des axialen Armes. Vorzugsweise erstreckt sich die Schneidkante geringfügig über das freie Ende des axialen Arms hinaus. Die größte Schnittbreite wird erreicht, wenn keine Unterlegplatten zwischen Schneidkörperträgern und Fräserkörper eingefügt werden. Durch Einfügen von Unterlegplatten wird der Schneidkörper jeweils gegenüber der benachbarten Hauptfläche des scheibenförmigen Fräserkörpers zurückversetzt, so daß die Schnittbreite vermindert wird.

Eine Weiterbildung der Erfindung besteht darin, daß die L-Form der Schneidkörperträger ausgenutzt wird, um eine optimale Abstützung derselben zu erzielen. Jeder Schneidkörperträger wird durch eine axiale Schraube an dem Fräserkörper befestigt. Die axiale Schraube ist mit einem kegelförmigen Schraubenkopf versehen, und der axiale Arm des Schneidkörperträgers weist eine entsprechende kegelförmige Einsenkung auf. Der Schneidkörperträger wird durch die Keilwirkung zwischen dem kegelförmigen Schraubenkopf und der kegelförmigen Einsenkung gegen die Anlageflächen der Ausnehmung verspannt. Die Gewindebohrung zur Aufnahme des Gewindeschaftes der axialen Schraube in jeder Ausnehmung wird relativ zu der entsprechenden Bohrung des Schneidkörperträgers so versetzt, daß durch die Keilwirkung zwischen dem kegelförmigen Schraubenkopf und der kegelförmigen Einsenkung eine Verspannung gegen eine radiale, achsparallele Anlagefläche und gegen eine tangentiale, achsparallele Anlagefläche der Ausnehmung eintritt. Die Verspannung jedes Schneidkörperträgers erfolgt somit an drei aufeinander senkrechten Flächen, die gegen die im Betrieb auftretenden Beanspruchungen gerichtet sind.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
Fig. 1 eine schematische Draufsicht auf die von der Nabe abgewandte Hauptfläche einer Ausführungsform des Fräswerkzeugs; und
Fig. 2 eine im Bereich der Befestigung eines Schneidkörperträgers geschnitten gezeigte Seitenansicht derselben Ausführungsform des Fräswerkzeugs.

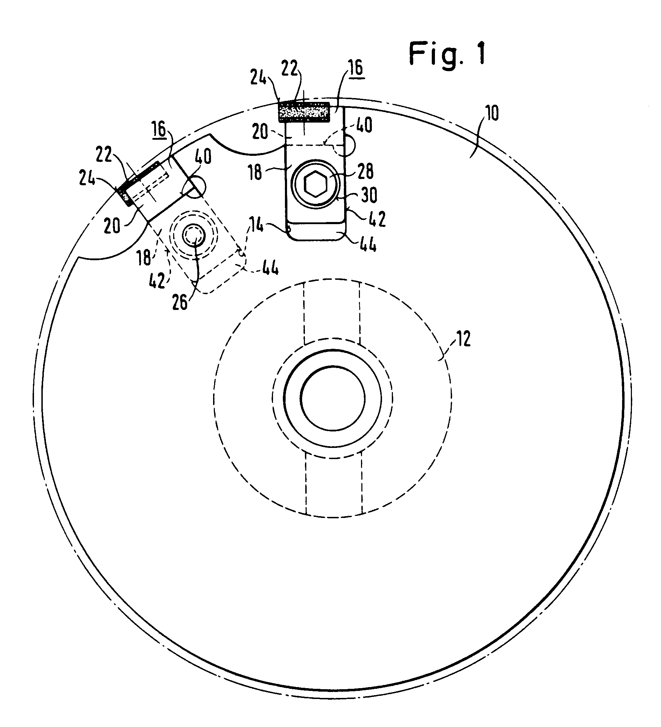

Das Fräswerkzeug besitzt einen scheibenförmigen Fräserkörper 10, an dessen einer Seite einer Nabe 12 angesetzt ist. Im Winkelabstand von jeweils 36° sind am Umfang des Fräserkörpers 10 Ausnehmungen zur Aufnahme jeweils eines Schneidkörperträgers angeordnet. Zur Vereinfachung sind in Fig. 1 nur zwei derartige Ausnehmungen und Schneidkörperträger gezeigt. Die Schneidkörperträger sind abwechselnd gegen die eine und gegen die andere Hauptfläche des scheibenförmigen Fräserkörpers 10 angesetzt. Entsprechend sind die Schneidkörperträger abwechselnd als linke und rechte, d.h. spiegelsymmetrische Teile ausgebildet.

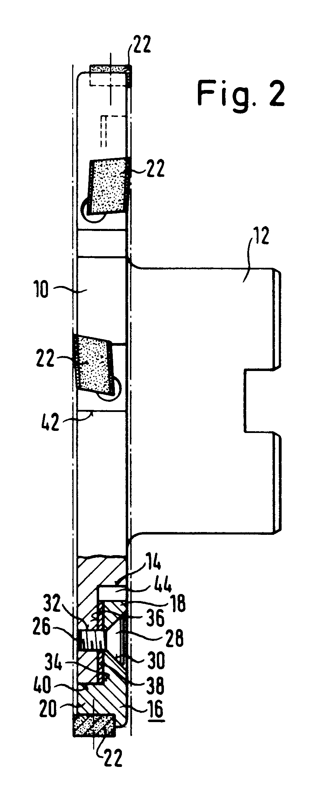

Einzelheiten der Schneidkörperträger und ihrer Befestigung am Fräserkörper werden nun unter Bezugnahme auf Fig. 2 beschrieben.

Wie der geschnittene Teil in Fig. 2 erkennen läßt, ist jede Ausnehmung 14 zur Aufnahme eines Schneidkörperträgers 16, im radialen Schnitt betrachtet, L-förmig. Entsprechend sind auch die Schneidkörperträger 16 L-förmig ausgestaltet. Jeder Schneidkörperträger 16 besteht also aus einem radialen Arm 18 und einem rechtwinklig an diesen anschließenden axialen Arm 20. An dem axialen Arm 20 ist ein Schneidkörper 22 befestigt. Die Befestigung des Schneidkörpers 22 kann beispielsweise mittels einer radialen oder tangentialen Schraube erfolgen. Die Schneidkante 24 des Schneidkörpers 22 erstreckt sich axial über das freie Ende des axialen Armes 20 hinaus. Die axiale Länge des Schneidkörpers 22 und seiner Schneidkante ist etwas größer als die halbe axiale Länge des axialen Armes 20. Die Befestigung des Schneidkörperträgers 16 an dem Fräserkörper 10 erfolgt mittels einer axialen Schraube 26, die einen kegelförmigen Schraubenkopf 28 aufweist. Der radiale Arm 18 des Schneidkörperträgers 16 weist eine dem Schraubenkopf 28 entsprechende kegelförmige Einsenkung 30 auf. Der Gewindeschaft der axialen Schraube 26 ist in einer axialen Gewindebohrung 32 des Schneidkörperträgers 10 aufgenommen. Zwischen der Ausnehmung 14 und dem Schneidkörperträger 16 sind drei aufeinander senkrechte Anlageflächen gebildet. Die Hauptanlagefläche befindet sich auf der der Ausnehmung 14 zugewandten Innenseite des radialen Armes 18 des Schneidkörperträgers 16. Diese in Fig. 2 mit 34 bezeichnete Hauptanlagefläche liegt der Anlagefläche 36 der Ausnehmung 14 gegenüber. Zwischen der Anlagefläche 36 und der Hauptanlagefläche 34 kann eine Unterlegplatte 38 von definierter Dicke eingefügt werden. Diese Unterlegplatte 38 weist eine Bohrung für den Durchtritt der axialen Schraube 26 auf.

Eine weitere Anlagefläche des Schneidkörperträgers 16 befindet sich an der Innenseite seines axialen Armes 20. Diese Anlagefläche ist in den Fig. 1 und 2 mit 40 bezeichnet. Sie erstreckt sich sowohl tangential als auch parallel zur Achse des Fräserkörpers 10.

Eine dritte Anlagefläche 42 des Schneidkörperträgers 16 ist eine radiale, gleichfalls zur Achse des Fräserkörpers 10 parallele ebene Fläche, die auf der Rückseite der Schneidkante 24 gelegen ist.

Die Gewindebohrung 32 in dem Fräserkörper 10 ist jeweils gegenüber der Einsenkung 30 des Schneidkörperträgers 16 so angeordnet, daß durch die Keilwirkung zwischen dem Schraubenkopf 28 und der Fläche der Einsenkung 30 Verspannungskräfte erzeugt werden, durch die der Schneidkörperträger mit seinen aufeinander senkrechten Anlageflächen gegen die entsprechenden Anlageflächen der Ausnehmung 14 gepreßt wird. Zunächst wird durch die axiale Schraube 26 eine Spannkraft in Axialrichtung erzeugt, welche die Hauptanlagefläche 34 gegen die Unterlegplatte 38 bzw. gegen die Anlagefläche 36 preßt. Ferner wird eine radial einwärts gerichtete Kraftkomponente erzeugt, durch welche die Anlagefläche 40 an die entsprechende Anlagefläche der Ausnehmung 14 angepreßt wird. Schließlich wird eine in Umfangsrichtung wirkende Kraftkomponente erzeugt, durch welche die Anlagefläche 42 des Schneidkörperträgers 16 an die gegenüberliegende Anlagefläche der Ausnehmung 14 angepreßt wird.

Zur Einstellung der Schnittbreite wird eine Unterlegplatte 38 von definierter Dicke gewählt. Wie Fig. 2 leicht erkennen läßt, ergibt sich die größte Schnittbreite, wenn keine Unterlegplatte 38 eingefügt wird.

Da das jeweils radial innere Ende des radialen Armes 18 jedes Schneidkörperträgers 16 keine Abstützung benötigt, verbleibt zwischen der radial inneren Wandung der Ausnehmung 14 und dem radial inneren Ende des radialen Armes 18 ein Abstand oder Spalt, der in den Fig. 1 und 2 mit 44 bezeichnet ist.

## Patentansprüche

1. Fräswerkzeug mit einem scheibenförmigen Fräserkörper, an dessen Umfang Schneidkörperträger einstellbar befestigt sind, wobei
a) jeder Schneidkörperträger (16) in einer ihm zugeordneten Ausnehmung (14) des Fräserkörpers (10) abgestützt und befestigt ist; gekennzeichnet durch folgende Merkmale:
b) jeder Schneidkörperträger (16) ist L-förmig ausgebildet mit einem radialen Arm (18), der in einem radialen Teil der ihm zugeordneten Ausnehmung (14) des Fräserkörpers (10) aufgenommen ist, und einem axialen Arm (20), der in einem axialen, nach außen offenen Teil der Ausnehmung (14) angeordnet ist und an dem der Schneidkörper (22) befestigt ist;
c) der radiale Arm (18) des Schneidkörperträgers (16) weist eine dem scheibenförmigen Fräserkörper (10) zugewandte Hauptanlagefläche (34) und die Ausnehmung (14) eine entsprechende Anlagefläche (36) auf, die parallel zu den Hauptflächen des Fräserkörpers (10) ist;
d) zwischen dieser Hauptanlagefläche (34) und der ihr gegenüberliegenden Anlagefläche (36) der Ausnehmung (14) ist eine Unterlegplatte (38) definierter Dicke einfügbar, durch welche die Schnittbreite des Fräswerkzeugs einstellbar ist.

2. Fräswerkzeug nach Anspruch 1, dadurch gekennzeichnet, daß die Ausnehmungen (14) abwechselnd auf der einen und auf der anderen Hauptseite des scheibenförmigen Fräserkörpers (10) angeordnet und die Schneidkörperträger (16) entsprechend als spiegelsymmetrische linke und rechte Teile ausgebildet sind.

3. Fräswerkzeug nach einem der vorstehenden Ansprüche, dadurch gekennzeichnet, daß die Schneidkörper (22) jeweils eine geringere axiale Länge als der axiale Arm (20) des Schneidkörperträgers (16) aufweisen und die Schneidkante (24) sich bis mindestens zu dem freien Ende des axialen Armes (20) erstreckt.

4. Fräswerkzeug nach Anspruch 3, dadurch gekennzeichnet, daß der Schneidkörper (22) mit seiner Schneidkante (24) über das freie Ende des axialen Armes (20) des Schneidkörperträgers (16) axial hinausragt.

5. Fräswerkzeug nach einem der vorstehenden Ansprüche, dadurch gekennzeichnet, daß die Schneidkörperträger (16) jeweils durch eine axiale Schraube (26) an dem Fräserkörper (10) befestigt sind.

6. Fräswerkzeug nach Anspruch 5, dadurch gekennzeichnet, daß die axiale Schraube (26) einen kegelförmigen Schraubenkopf (28) und der axiale Arm (20) des Schneidkörperträgers (16) eine entsprechende kegelförmige Einsenkung (30) aufweist und daß der Schneidkörperträger (16) durch die Keilwirkung zwischen dem kegelförmigen Schraubenkopf (28) und der kegelförmigen Einsenkung (30) gegen die Anlageflächen der Ausnehmung (14) verspannt ist.

7. Fräswerkzeug nach Anspruch 6, dadurch gekennzeichnet, daß die Gewindebohrung (32) zur Aufnahme des Gewindeschaftes der axialen Schraube (26) in jeder Ausnehmung (14) relativ zu der entsprechenden Bohrung bzw. Einsenkung (30) des Schneidkörperträgers (16) so versetzt angeordnet ist, daß durch die Keilwirkung zwischen dem kegelförmigen Schraubenkopf (28) und der kegelförmigen Einsenkung (30) eine Verspannung gegen eine radiale, achsparallele Anlagefläche (42) und gegen eine tangentiale, achsparallele Anlagefläche (40) der Ausnehmung (14) eintritt.

8. Fräswerkzeug nach einem der vorstehenden Ansprüche, dadurch gekennzeichnet, daß jeweils zwischen dem radial inneren Ende des radialen Armes (18) eines Schneidwerkzeugträger (16) und der radial inneren Wandung der Ausnehmung (14) ein Abstand oder Spalt (44) verbleibt.

## Claims

1. A milling cutter comprising a disc-shaped milling cutter body, to the periphery of which cutting member carriers are adjustably attached, wherein
(a) each cutting member carrier (16) is supported and attached in an assigned recess (14) of the milling cutter body (10);
characterised by the following features:
b) each cutting member carrier (16) is of L-shaped construction comprising a radial arm (18) which is accommodated in a radial part of its assigned recess (14) of the milling cutter body (10), and an axial arm (20) which is arranged in an axial, outwardly open part of the recess (14) and to which the cutting member (22) is attached;
c) the radial arm (18) of the cutting member carrier (16) comprises a main bearing surface (34) facing towards the disc-shaped milling cutter body (10) and the recess (14) comprises a corresponding bearing surface (36) which extends in parallel to the main surfaces of the milling cutter body (10);
d) a support plate (38) of determinate thickness, by means of which the cutting breadth of the milling cutter is adjustable, is insertable between this main bearing surface (34) and the oppositely disposed bearing surface (36) of the recess (14).

2. A milling cutter as claimed in Claim 1, characterised in that the recesses (14) are arranged alternately on the one and on the other main side of the disc-shaped milling cutter body (10), and the cutting member carriers (16) are constructed correspondingly as mirror-symmetrical left-hand and right-hand components.

3. A milling cutter as claimed in one of the preceding claims, characterised in that the cutting members (22) each possess a shorter axial length than the axial arm (20) of the cutting member carrier (16), and the cutting edge (24) extends at least to the free end of the axial arm (20).

4. A milling cutter as claimed in Claim 3, characterised in that the cutting edge (24) of the cutting member (22) projects axially beyond the free end of the axial arm (20) of the cutting member carrier (16).

5. A milling cutter as claimed in one of the preceding claims, characterised in that the cutting member carriers (16) are each attached to the milling cutter body (10) by an axial screw (26).

6. A milling cutter as claimed in Claim 5, characterised in that the axial screw (26) comprises a conical screw head (28), and the axial arm (20) of the cutting member carrier (16) comprises a corresponding, conical depression (30), and that the cutting member carrier (16) is clamped against the bearing surfaces of the recess (14) by the wedging action between the conical screw head (28) and the conical depression (30).

7. A milling cutter as claimed in Claim 6, characterised in that the threaded bore (32) which accommodates the threaded shank of the axial screw (26) in each recess (14) is offset relative to the corresponding bore or depression (30) of the cutting member carrier (16) in such manner that as a result of the wedging action between the conical screw head (28) and the conical depression (30), clamping against a radial, axially parallel bearing surface (42) and against a tangential, axially parallel bearing surface (40) of the recess (14) takes place.

8. A milling cutter as claimed in one of the preceding claims, characterised in that a spacing or gap (44) in each case remains between the radially inner end of the radial arm (18) of a cutting member carrier (16) and the radially inner wall of the recess (14).

## Revendications

1. Outil de fraisage comportant un corps de fraise en forme de disque sur le pourtour duquel des supports de corps coupants sont fixés de manière réglable,
a) chaque support de corps coupant (16) étant supporté et fixe dans un évidement (14), qui lui est affecté, du corps de fraise (10),
caractérisé par les caractéristiques suivantes :
b) chaque support de corps coupant (16) est en forme de L, avec un bras radial (18) qui est logé dans une partie radiale de l'évidement (14), à lui affecté, du corps de fraise (10), et un bras axial (20) qui est placé dans une partie axiale ouverte vers l'extérieur de l'évidement (14) et auquel le corps coupant (22) est fixé,
c) le bras radial (18) du support de corps coupant (16) présente une face d'appui principale (34) dirigée vers le corps de fraise en forme de disque (10) et l'évidement (14) présente une face d'appui correspondante (36) qui est parallèle aux faces principales du corps de fraise (10), et
d) entre cette face d'appui principale (34) et la face d'appui (36) située en face d'elle de l'évidement (14) peut être insérée une plaque de calage (38) d'épaisseur déterminée qui permet de régler la largeur de coupe de l'outil de fraisage.

2. Outil de fraisage selon la revendication 1, caractérisé par le fait que les évidements (14) sont situés alternativement sur un côté principal et l'autre côté principal du corps de fraise en forme de disque (10) et les supports de corps coupants (16) sont, de façon correspondante, des éléments gauches et droits symétriques par rapport à un plan.

3. Outil de fraisage selon l'une des revendications précédentes, caractérisé par le fait que les corps coupants (22) ont chacun une plus petite longueur axiale que le bras axial (20) du support de corps coupant (16), et l'arête coupante (24) s'étend au moins jusqu'à l'extrémité libre du bras axial (20).

4. Outil de fraisage selon la revendication 3, caractérisé par le fait que l'arête coupante (24) du corps coupant (22) dépasse axialement l'extrémité libre du bras axial (20) du support de corps coupant (16).

5. Outil de fraisage selon l'une des revendications précédentes, caractérisé par le fait que les supports de corps coupants (16) sont fixés chacun au corps de fraise (10) par une vis axiale (26).

6. Outil de fraisage selon la revendication 5, caractérisé par le fait que la vis axiale (26) présente une tête conique (28) et le bras axial (20) du support de corps coupant (16) présente une fraisure conique correspondante (30), et que le support de corps coupant (16) est serré contre les faces d'appui de l'évidement (14) par l'effet de coin entre la tête conique (28) de la vis et la fraisure conique (30).

7. Outil de fraisage selon la revendication 6, caractérisé par le fait que le trou taraudé (32) destiné à recevoir la tige filetée de la vis axiale (26) dans chaque évidement (14) est décalé par rapport au trou ou à la fraisure correspondant (30) du support de corps coupant (16) de façon que l'effet de coin entre la tête conique (28) de la vis et la fraisure conique (30) produise un serrage contre une face d'appui radiale parallèle à l'axe (42) et contre une face d'appui tangentielle parallèle à l'axe (40) de l'évidement (14).

8. Outil de fraisage selon l'une des revendications précédentes, caractérisé par le fait qu'il reste un intervalle ou interstice (44) entre l'extrémité intérieure radialement du bras radial (18) de chaque support d'outil coupant (16) et la paroi intérieure radialement de l'évidement (14) correspondant.
